# EUROPEAN PATENT APPLICATION

(11) **EP 3 118 268 A1**
(43) Date of publication of application: **18.01.2017**
(21) Application number: 16178923.5
(22) Date of filing: 11.07.2016
(51) Int. Cl.: C09D 11/00, B22F 1/00, B22F 1/02, B82Y 30/00, C09D 11/322, C09D 11/52, C09D 17/00

(54) **STABILIZED NANOPARTICLES AND DISPERSIONS OF THE STABILIZED NANOPARTICLES AND METHODS OF APPLICATION**

(30) Priority: 16.07.2015 US 201514800932
(71) Applicant: Dow Global Technologies LLC, Midland, MI 48674 (US); Rohm and Haas Electronic Materials LLC, Marlborough, MA 01752 (US); ROHM AND HAAS COMPANY, Philadelphia, PA 19106-2399 (US)
(72) Inventor: BASHIR, Mubasher A., 4530AA Terneuzen (NL); DE GRAAF, Michael A., 4530AA Terneuzen (NL); BU, Lujia, Marlborough, MA Massachusetts 01752 (US); SCIERANKA, Kinga, 4530AA Terneuzen (NL); CREAMER, Marianne P., Collegeville, PA Pennsylvania 19426 (US)
(74) Representative: Houghton, Mark Phillip

(57) **Abstract**

Compositions of nanoparticles are stabilized by capping agents which are composed of methacrylic acid and n-butylmethacrylate random copolymers having hydrophobic and hydrophilic moieties and low molecular weight. The nanoparticle compositions have low viscosity, high nanoparticle loading and may be selectively applied to substrates by methods such as inkjet, aerosol and electrospinning.

## Description

### Field of the Invention

The present invention is directed to stabilized nanoparticles and dispersions of the stabilized nanoparticles and methods of application. More specifically, the present invention is directed to stabilized nanoparticles and dispersions of the stabilized nanoparticles and methods of application where a stabilizer of the nanoparticles is a methacrylic acid and n-butylmethacrylate random copolymer having hydrophilic and hydrophobic segments and a low molecular weight.

### Background of the Invention

Nanoparticles have properties that are valuable in a variety of applications, such as biology, chemistry, material science, electronics, imaging and medicine. In the electronics industry nanoparticles are typically used as catalysts, such as in electroless metal plating; they are used in the formation of electromagnetic interference (EMI) shielding coatings, radio frequency interference (RFI) shielding coatings, and in the formation of metal mesh for transparent conductive materials (TCM). However, particles, such as metal particles at the nanometer level have high surface energy and a lowering of the melting point occurs on the particle surfaces, and as a result, the nanoparticles clump together easily, thus resulting in poor storage stability. It is therefore necessary to protect the nanoparticles with capping agents to stabilize the nanoparticles and keep them dispersed or re-disperse them in the medium. The nature of the capping agents on the nanoparticles influences their physical and chemical behavior. The capping agents on nanoparticles determine the surface properties of the nanoparticles. Therefore the type of capping agents used on the nanoparticles can be an enabling factor for which applications the nanoparticles are used.

In the electronics field there is a continuous push towards smaller and smaller feature sizes on electronic devices. To address this problem, the electronics field has looked toward using processes such as screen printing, inkjet printing, aerosol jetting and electrospinning to apply inks containing capped nanoparticles to various substrates to reduce feature sizes of components on electronic devices. Such processes are beneficial in printed electronics applications, printed antennas, touch display sensors, alternative energy devices such as solar cells, light emitting diodes (LED), photovoltaic devices in general and additive manufacturing, i.e. 3D printing, of microelectronics and other electronics related applications.

Ideally, nanoparticle inks include: 1) high particle loading such that more volume of metal is deposited per drop which reduces the number of passes required to build a given thickness of deposited features, 2) near bulk metal resistivity after sintering to maximize conductivity per unit volume of deposited features, 3) low temperature sintering to avoid damage to the substrate on which the ink is applied, and 4) appropriate rheological behavior such as low viscosity to allow for easier processing. In addition, nanoparticle inks require careful control of nanoparticle size or particle size distribution and nanoparticle stability. However, as mentioned above, the capping agents on the nanoparticles affect the physical and chemical properties of the nanoparticles. Many polymeric capping agents, such as polyvinylpyrrolidone and polyvinyl alcohol may fulfill some of the requirements mentioned above but do not fulfill all or most of the requirements which the industry desires for nanoparticle inks. Capping agents that bind strongly to nanoparticle surfaces provide the most stability to nanoparticles, however, nanoparticles stabilized with such capping agents do require stronger energies for sintering. On the other hand, the stability of nanoparticles capped with mild binding capping agents may not be enough to provide good control of ink properties. The syntheses of nanoparticles with the later kind of capping agents is also rather challenging, since, excessively large amounts of capping agent need to be used during synthesis, which need to be later removed with multiple washing steps to recover pure nanoparticles. In addition, these syntheses provide only a small amount of nanoparticles product per unit volume of synthesis, making it industrially non-viable. Accordingly, there is a need for improved capping agents for nanoparticles.

### Summary of the Invention

Compositions include nanoparticles including metal and one or more capping agents composed of random copolymers of methacrylic acid and n-butylmethacrylate having hydrophilic and hydrophobic segments.

Methods include providing a substrate; providing a composition including nanoparticles including metal and one or more capping agents composed of random copolymers of methacrylic acid and n-butylmethacrylate having hydrophilic and hydrophobic segments; and depositing the composition on the substrate to coat the substrate.

The combination of hydrophilic and hydrophobic segments in the random copolymers allows for the use of mixed organic and aqueous solvents when re-dispersing the nanoparticles compared to only aqueous systems when using only the hydrophilic or only organic systems when using hydrophobic capping agents. The ability to re-disperse in mixed solvents allows for optimizing the dispersing mediums polarity and vapor pressure to match with application requirements while avoiding nanoparticle aggregation or collapse of dispersion. The combination of the hydrophobic and hydrophilic segments in random arrangements enables good solvation of the capping agent chains in the presence of water and organic solvent mixtures, which may provide thicker steric barrier for stabilization of nanoparticles even with a low molecular weight of capping agent copolymer. The preparation of nanoparticles using the methacrylic acid and n-butylmethacrylate random copolymer can be performed at significantly higher nanoparticle precursor and nanoparticle concentrations than many conventional capping agents. In addition, nanoparticles of larger size may be incorporated in the dispersion in contrast to many conventional capping agents rather easily, due to good control in particle size distribution during synthesis. Having a broad range of particle sizes in nanoparticle dispersions enables producing dispersions that have low viscosities compared to those with monodisperse particle sizes, due to higher maximum packing fraction possible with broader distribution as well as due to reduction in the effective volume fraction of nanoparticles in dispersions with the same particle loading in weight. The random distribution of the different monomer moieties with hydrophobic and hydrophilic segments along the backbone results in improved stability of the nanoparticles compared to homopolymers or block copolymers.

The random copolymers of low weight average molecular weight can be used to decrease the capping agent thickness on the surface of the nanoparticles enabling a lower viscosity of nanoparticle dispersions at equal weight fraction and particle size compared to many conventional capping agents, where synthesis of small nanoparticles with low molecular weight polymers is challenging. The lower viscosity allows the nanoparticle dispersions to be applied by inkjet and electrospinning as well as other conventional methods where low nanoparticle dispersion viscosity is advantageous. The low weight average molecular weight of the capping agent also reduces the fraction of insulating organic material in deposited structures of the nanoparticles and improves the bulk resistivity after sintering compared to nanoparticles with higher molecular weight capping agents under equal sintering conditions. Low sintering temperatures allow the nanoparticles to be deposited on a variety of substrates without concern for damage to the substrates during sintering. The sintered nanoparticles have low resistivities, thus they are highly conductive. The combination of all of the above parameters provides for improved nanoparticle dispersions.

### Brief Description of the Drawings

Figure 1 is a particle size distribution bar graph of nanoparticle count vs. nanoparticle diameter of silver nanoparticles capped with a random methacrylic acid/n-buytlmethacrylate copolymer as determined by SEM image analysis with an average particle size of 56 nm.
Figure 2 is a graph of viscosity in mPa s vs. shear rate [1/s] of a dispersion of 70 wt% silver nanoparticles capped with a random methacrylic acid/n-buytlmethacrylate copolymer.
Figure 3 is a graph of viscosity in mPa s vs. shear rate [1/s] of 70 wt% silver nanoparticles capped with a random methacrylic acid/n-buytlmethacrylate copolymer having a weight average molecular weight of 4000 g/mole vs. 69wt% silver nanoparticles capped with a random methacrylic acid/n-buytlmethacrylate copolymer having a weight average molecular weight of 20,000 g/mole.
Figure 4 is a graph of viscosity in mPa s vs. shear rate [1/s] of 66 wt% and 69 wt% silver nanoparticles capped with a random methacrylic acid/n-buytlmethacrylate copolymer having a weight average molecular weight of 20,000 g/mole.
Figures 5A is a SEM micrograph at 100,000 X of silver nanoparticles prepared with acrylic acid homopolymer capping agent.
Figure 5B is a SEM micrograph at 100,000 X of silver nanoparticles prepared with acrylic acid/maleic acid copolymer capping agent.
Figure 5C is a SEM micrograph at 100,000 X of silver nanoparticles prepared with methacrylic acid/ n-butylmethacrylate random copolymer capping agent.

### Detailed Description of the Invention

As used throughout the specification, the following abbreviations have the following meaning, unless the context clearly indicates otherwise: °C = degrees Centigrade; g = gram; L = liter; mL = milliliter; µL = microliter; rpm = revolutions per minute; msec = milliseconds; D.I. = deionized water; Hz = Hertz; mPa s = millipascal seconds; s = seconds; Mw = weight average molecular weight; m = meters; mm = millimeters; µm = micron = micrometer; cm = centimeter; nm = nanometers; Ω = ohms; Ωm = ohm meters; kV = kilovolts; UV = ultraviolet; IR = infrared; SEM = scanning electron micrograph; TGA = thermal gravimetric analysis; shear rate = 1/s or ⁻s; wt% = weight percent; and vol% = volume percent. The term "monomer" means a molecule that forms the basic unit of a homopolymer or copolymer. The term "moiety" means a part of a molecule or polymer that may include either whole functional groups or parts of functional groups as substructures. The terms "moiety", "group" and "segment" are used interchangeably throughout the specification. The terms "film", "layer" and "coating" are used interchangeably throughout the specification. All percent values are weight percent unless otherwise specified. All numerical ranges are inclusive and combinable in any order, except where it is logical that such numerical ranges are constrained to add up to 100%.

The nanoparticles are stabilized or capped with random copolymers having hydrophobic and hydrophilic segments. The random copolymers are composed of methacrylic acid moieties and n-butylmethacrylate moieties. The random copolymers stabilize the nanoparticles such that substantially uniform dispersions of nanoparticles may be formed with substantially reduced nanoparticle agglomeration in mixed water and organic solvents. The random hydrophobic and hydrophilic segments also enable good adsorption of the capping agent to the surface of nanoparticles.

The random copolymers may be prepared by various conventional polymerization methods known in the art. For example, they may be prepared by addition polymerization of a mixture of methacrylic acid monomers forming the hydrophilic moiety and n-butylmethacrylate monomers forming the hydrophobic moiety of the random copolymers. The copolymer composition is controlled by the amount of monomer used in the synthesis while the microstructure, i.e., random versus block, is controlled by the relative monomer feed rate. Such process conditions for addition polymerization are well known to those of skill in the art. Preferably the amount of methacrylic acid moiety in the copolymer is 47 mole% to 83 mole% and the n-butylmethacrylate moiety preferably ranges from 17 mole% to 53 mole%. More preferably the methacrylic acid moiety is from 47 mole% to 62 mole% and the n-butylmethacrylate moiety is from 38 mole% to 53 mole%. The random copolymer has a low weight average molecular weight ranging from 3000 g/mole to less than 20,000 g/mole, preferably 3500 g/mole to 10,000 g/mole, more preferably from 3500 g/mole to 5500 g/mole. The low weight average molecular weight of the random copolymer decreases thickness of the copolymer film on the surface of the nanoparticles and aids in providing low viscosity nanoparticle dispersions.

The synthesis of the nanoparticles may be prepared by various conventional methods known in the art using the methacrylic acid and n-butylmethacrylate random copolymer. There is no limitation on the methods envisioned in the preparation of the nanoparticles. In general, a capping solution is prepared containing from 5-50 wt% of the random copolymer in an aqueous/organic solvent mixture, preferably from 10-30 wt%. Typically the weight ratio of water to one or more organic solvents is 10:90 to 90:10, preferably 30:60 to 60:30, more preferably 40:50 to 50:40. The combination of the hydrophobic and hydrophilic segments of the random copolymer and the water and organic solvent mixture affect the capping agent film thickness on the surface of the nanoparticles to provide adjustable viscosity by change of solvent type and amount of organic solvents. Such organic solvents include, but are not limited to, glycols, glycol ethers, glycol ether acetates, ketones, esters, aldehydes, alcohols and alkoxylated alcohols. Typically, glycols such as ethylene glycol, diethylene glycol, triethylene glycol, polyethylene glycol, propylene glycol and dipropylene glycol; glycol ethers such as diethylene glycol monomethyl ether, diethylene glycol monopropyl ether, diethylene glycol monobutyl ether and ethylene glycol monomethyl ether; and alcohols such as ethyl alcohol, methyl alcohol isopropyl alcohol and tert-butyl alcohol are used.

When a source of the nanoparticles is a metal salt, one or more reducing agents may be included in the capping agent and aqueous/organic solvent mixture to reduce the metal ions from the metal salt to metal. Such reducing agents include but are not limited to, hydrazine, hydrazine, hydrate, sodium borohydride, lithium borohydride, ascorbic acid, formic acid, aldehydes, amines including primary, secondary and tertiary amines and alkanolamines such as ethanolamines and diethanolamines. Such reducing agents may be included in conventional amounts and depend upon the type of metal ions to be reduced. Such amounts are well known in the art.

One or more buffering agents may be included in the mixture to maintain an alkaline pH of 8-14. Preferably the pH ranges from 8-12, more preferably the pH ranges from 8 to 10. Conventional buffering agents may be included such as, but not limited to, bases such as alkali hydroxides such as sodium and potassium hydroxide, ammonium hydroxide, amines, carbonates and bicarbonates, inorganic acids such as sulfuric acid, hydrochloric acid and nitric acid, carboxylic acids such as acetic acid, citric acid, formic acid and ascorbic acid. Sufficient amount of the bases and acids are included to achieve and maintain the desired pH.

The above components may be mixed together at room temperature to 40 °C. Typically the components are mixed at temperatures from room temperature to 30 °C. Mixing may be done using conventional mixing processes. Mixing is done until a substantially clear solution is obtained. In general, stirring is done from 200 rpm to 1000 rpm for 1 to 5 hours.

One or more sources of conductive nanoparticles are then added to the clear solution. Preferably the sources of nanoparticles are soluble in the solution or at least readily dispersible. Sources of metals as metal ions include, but are not limited to metal oxides, metal hydroxides, metal salts of inorganic acids and organic acids such as nitrates, nitrites, sulfates, halides such as fluorides, chlorides, bromides, iodides, carbonates, phosphates, azides, borates, sulfonates, carboxylates such as formates, acetates, propionates, oxalates and citrates, substituted carboxylates, such as halogen carboxylates and salts and acids where the metal is part of an anion such as hexachloroplatinates, and tetrachloroaurate. Many of such sources of metal ions are commercially available or may be prepared from chemical literature. Metals include, but are not limited to silver, gold, platinum, palladium, aluminum, indium, rubidium, ruthenium, rhodium, osmium, copper, cobalt, nickel, tin and iron. Alloys of metals may also be included. Preferably the metals are silver, gold, palladium and copper. More preferably, silver, gold and copper are the choice of metals. Most preferably, silver is the choice of metal because it is one of the more thermodynamically stable metals, i.e., corrosion resistant.

Typically, one or more sources of the conductive material such as a metal ion source are added to the above mixture by a continuous feeding process at a controlled rate. Vigorous stirring is done to achieve a substantially uniform mixture. Stirring rates typically range from 250 rpm to 1000 rpm. Temperatures of the reaction mixture may range from room temperature to 100 °C and higher. Reaction times may vary to achieve formation of the nanoparticles. The total weight of the metal ions or metal precursors in the reaction mixture is preferably at least 8wt%, more preferably at least 15-20wt%. The reaction mixture is typically allowed to cool down to room temperature and acetone or other organic solvent is added to facilitate the precipitation of solid material from the reaction mixture. The supernatant is decanted and the solid material is re-dispersed in a water/organic solvent mixture. The capped nanoparticles may be retrieved by centrifugation, settling, dialysis, sonication or evaporation. The conductive material purity may range from 25wt% to as high as 99 wt% as determined by TGA. Preferably the conductive material purity is from 50wt% to 99wt%. The particle size distribution ranges from 20 nm to 150 nm of at least 70% of the particles, preferably the particle distribution is from 20 nm to 100 nm as measured by scanning electron microscope. The broad nanoparticle distribution also contributes to a low viscosity. The average nanoparticle size is from 30 nm to 80 nm, preferably from 40 nm to 70 nm, more preferably from 45 nm to 65 nm as determined by SEM analysis.

Dispersions of the capped nanoparticles may be prepared by various conventional methods known in the art. Typically, dried capped nanoparticles are placed in a ball mill jar and ball milled with a water and organic solvent mixture. The organic solvents described above may be used in the water and organic solvent mixture as well as the ratio of water to organic solvent may be modified to form the nanoparticle dispersions. Ball milling may be done at 10-20 Hz for 2-5 hours at room temperature to achieve the desired incorporation of nanoparticles in the dispersion. The loading of the nanoparticles in terms of metal weight are incorporated in the dispersion in amounts of 50wt% or greater, preferably from 60wt% to 80wt%, more preferably from 60wt% to 70wt% as determined by TGA.

Viscosities of the dispersions having the particle sizes and loadings described above may range from 5 mPa s to 70 mPa s over a shear rate of 0.1 to 1000 at 20 °C, preferably the viscosities range from 5 mPa s to 30 mPa s over a shear rate of 0.1 to 1000 at 20 °C. The thin film capping agent with the low weight average molecular weight copolymer reduces the excluded volume effects, thus helping to reduce the viscosity of the capped nanoparticles. The relatively low viscosities of the nanoparticle dispersions enable the dispersions highly desirable for use as inks in inkjet and electrospinning applications. In addition the nanoparticle dispersions may be used in screen printing, flexographic, gravure, photo-pattern and other processing techniques; however, the preferred mode of applying the nanoparticle dispersions are by inkjet and electrospinning. Most preferably the nanoparticle dispersions are applied by electrospinning.

Inkjet printing may be a continuous inkjet method or a drop-on-demand method. The continuous method is a printing method where the direction of the ink is adjusted by changing an electromagnetic field while continuously jetting the ink using a pump. The drop-on-demand is a method which dispenses the ink only when needed on an electronic signal. Drop-on-demand may be divided into a piezoelectric inkjet method where pressure is generated by using a piezoelectric plate causing a mechanical change by electricity and a thermal ink jet method using pressures which are generated by the expansion of bubbles produced by heat. Conventional parameters for ink jetting ink nanoparticle dispersions are well known in the art and may be used to inkjet the ink nanoparticle dispersions of the present invention; however, specific settings of the ink jetting parameters for a particular dispersion may vary and minor experimentation may be involved to achieve the desired ink jetting performance for a particular nanoparticle dispersion.

Electrospinning such as coaxial electrospinning may be used to deposit the nanoparticle dispersions on a substrate. The compatibility of the methacrylic acid and n-butylmethacrylate random copolymer with water and organic solvent mixtures enables the nanoparticles to be highly suitable for coaxial electrospinning where mixtures of water and organic solvents are an integral part of coaxial electrospinning applications. An example of a conventional coaxial electrospinning process and parameters is disclosed in U.S. 2014/0131078.

Optionally, the nanoparticle dispersions may include one or more additive to tailor the dispersions for specific applications. Such additives include, but are not limited to lubricants, polymer binders, humectants, waxes, resins, surfactants, colorants, rheological modifiers, thickeners and adhesion promoters. The additives may be included in the dispersions in conventional amounts known by those of ordinary skill in the art for a particular function. Preferably, the nanoparticle dispersions exclude such additives.

There is no particular limit on the types of substrates which may be used for using the nanoparticle dispersions of the present invention. Such substrates include glass, oxide substrates, silicon, metal, paper and plastic or polymer materials. Examples of polymer substrates include thermoplastic and thermosetting resins. Exemplary thermoplastic resins include, but are not limited to, general-purpose plastics such as PE (polyethylene), PVC (polyvinyl chloride), PS (polystyrene), PP (polypropylene), ABS (acrylonitrile-butadienestyrene), AS (acrylonitrile-styrene), PMMA (polymethyl methacrylate), PVA (polyvinyl acetate), PVDC (polyvinylidene chloride), PPO (polyphenylene oxide), and PET (polyethylene terephthalate); general-purpose engineering plastics such as PA (polyamide), POM (polyacetal), PC (polycarbonate); PPE (modified polyphenylene ether), PBT (polybutylene terephthalate), GE-PET (glass fiber reinforced polyethylene terephthalate) and UHPE (ultrahigh-molecular weight polyethylene); and super-engineering plastics such as PSF (polysulfone), PES (polyethersulfone), PPS (polyphenylene sulfide), PAR (polyarylate), PAI (polyamideimide), PEEK (polyetheretherketone), PI (polyimide) and fluorocarbon resins. Exemplary thermosetting resins include, but are not limited to, phenolic resins, urea resins, melamine resins, alkyd resins, unsaturated polyesters, epoxy resins, diallyl phthalate polymers, polyurethanes and silicone resins.

The nanoparticle dispersions may be applied as conductive coatings to a substrate as well as being selectively applied such that they form a pattern for electrical current tracks on the substrate. The nanoparticle dispersion may also be used as catalysts such as in electroless metal plating. After application the dispersions may be dried at low temperatures such as air drying at room temperature. The dried nanoparticles may be converted to a more conductive form by sintering. Sintering may be done thermally at temperatures of 100 °C to 400 °C, photonically or by chemical methods. Such methods are well known in the art. Thermal sintering is typically limited to substrates such as glass, metals and polyimides. Preferably, sintering is done photonically or by chemical methods to be compatible with temperature sensitive substrates. Film resistivity of the nanoparticle inks may range from 8 x 10⁻⁸ Ωm to 1.5 x 10⁻⁷ Ωm.

The organic content of the nanoparticles may range, from 1wt% to 10wt%. Preferably the organic content ranges from 2wt% to 5wt%. Organic content by volume percent may range from 10vol% to 50vol%. Preferably the organic content may range from 15vol% to 35vol%. The lower the organic content the lower the resistivity. Organic content refers to the capping agents and other non-volatile organic additives of the nanoparticles.

If the organic content is too low the nanoparticle dispersion may not be stable. On the other hand if there is too high an organic content the nanoparticle dispersion may not achieve the desired high conductivity. The organic content may be determined by conventional methods in the art. Typically the organic content is determined by TGA.

The nanoparticle dispersions may be used in the manufacture of various electronic devices and components such as but not limited to, TCMs, printed circuit or wiring boards, EMI shielding, RFI shielding, solar cells and photovoltaics.

The following examples are included for illustration of some embodiments of the invention but are not intended to limit the scope of the invention.

### Example 1

### Synthesis of Nanoparticles

Silver nanoparticles and inks were prepared as follows. First, 23.6 g of capping solution 20 wt % methacrylic acid/n-butylmethacrylate random copolymer with hydrophilic and hydrophobic segments with 47 mole% moieties from methacrylic acid and 53 mole% moieties from n-butylmetacrylate in water/propylene glycol mixture (10:90 wt/wt) was placed in a reaction flask, and 315 g of diethanolamine, 114 g of propylene glycol and additional 20 g D.I. water was added to the flask. The weight average molecular weight of the random copolymer was 4000 g/moles as determined by gel permeation chromatography (GPC) relative to polystyrene calibration. The mixture was stirred at a rate of 500 rpm for 1 hour to obtain a clear solution. The pH of the solution was approximately 8. Freshly prepared silver nitrate solution (67 mL of 50 wt% solution in D.I. water) was then quickly added to the reaction mixture under vigorous stirring (stirring rate of 1000 rpm) at room temperature. A brownish precipitate was formed upon addition of the silver nitrate solution, which re-dissolved instantaneously. The temperature of reaction mixture was then raised to 75 °C within 15 minutes and allowed to react for 3 hours. At the end of the reaction, the mixture had turned dark brown in color indicating high concentrations of silver nanoparticles.

The reaction mixture was allowed to cool down and 500 mL of acetone was added to facilitate the precipitation of solid material from solution. The supernatant was decanted and the paste in the bottom of flask was re-dispersed in 800 mL water/1-propoxy-2-propanol (75/25 wt/wt) and centrifuged at 10000 rpm for 1 hour. The solid cake resulted from centrifugation was dried in ambient conditions to obtain about 50 g of nanoparticle material. The purity for this material was greater than 98 wt% silver as determined by TGA (heating up to 600 °C under air atmosphere). The particle size of the particles was measured by SEM image analysis using multiple images. The average size was found to be 56 nm.

### Example 2

### Preparation of Nanoparticle Dispersion

45 g of dried nanoparticles (>98 wt% silver purity) were placed in a ball mill jar (35 mL) and 18 g of dispersing solvent (water/1-propoxy-2-propanol/tert-butanol 35/15/50 mixture by weight) was added. The mixture was ball milled at 15 Hz for 3 hours. This treatment resulted in about 25 mL of 70 wt% silver nanoparticle ink having viscosity of about 30 mPa s as measured by RS600 rheometer from ThermoFisher. The rheometer had parallel fixtures with 25 mm diameter and 1mm gap height. Measurements were performed at 20 °C.

### Example 3

### Silver Nanoparticle Size Distribution

The nanoparticle size distribution of the nanoparticles prepared in Example 2 was determined by SEM image analysis. For SEM, the samples were mounted on a sample holder using double-sided adhesive carbon discs, dried and sputtered with chromium using a Cressington 208HR high-resolution sputter-coater. The thickness of the coating was set at 5 nm at a current of 80 milliamperes. The images were collected employing Philips XL30 FEGSEM scanning electron microscope operating at an accelerating voltage of 20 kV using a back scattered detector (BSE) at different magnifications. Several images with 100,000 X magnification were used to measure particle diameters using image processing software. The nanoparticle size data was analyzed and plotted as distributions using JMP software (SAS Institute Inc.).

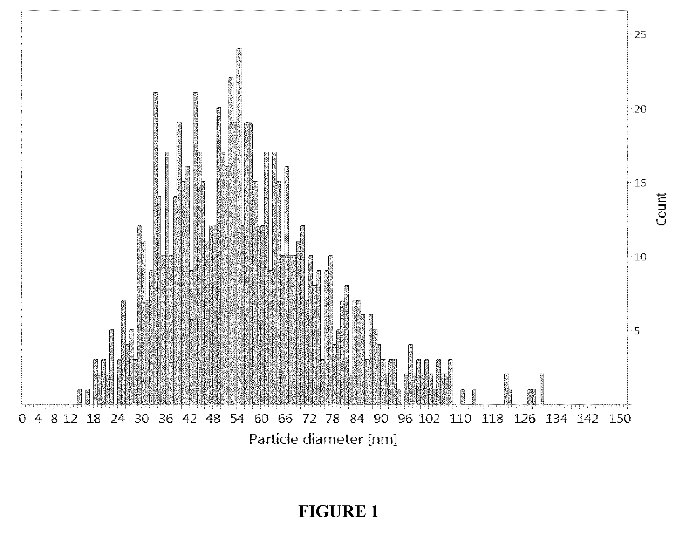

The results of the nanoparticle size distribution are shown in Figure 1. The bulk of the particles, 70%, fell within a range of 35 nm to 70 nm with an average particle size of 56 nm. Such a broad nanoparticle size distribution and small average nanoparticle size indicated that the silver nanoparticles were suitable for inkjet and electrospinning applications.

### Example 4

### Rheology Properties of Silver Nanoparticles

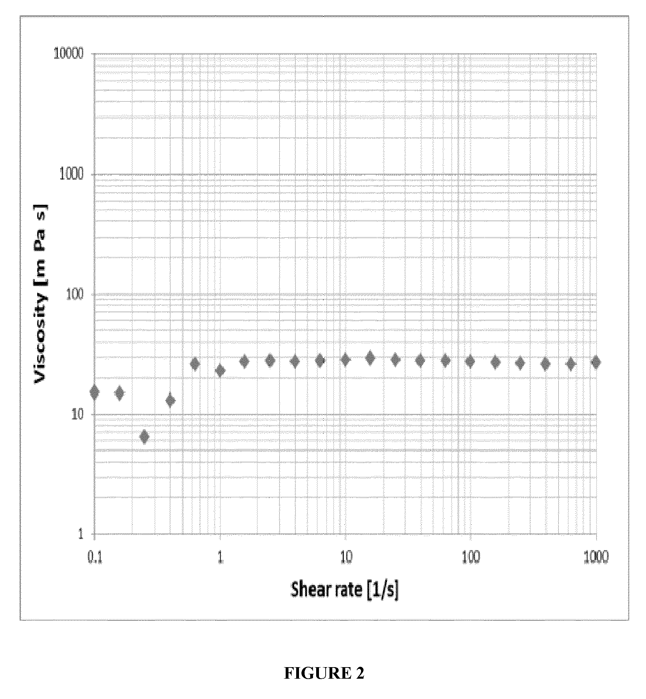

The rheology properties of the nanoparticles prepared in Example 2 were determined using the RS600 rheometer from ThermoFisher and a graph of the viscosity in mPa s was plotted against the shear rate. As shown in Figure 2, the high silver nanoparticle loading maintained a substantially constant low viscosity of around 50 mPa s over a shear rate of 0.5 to 1000 at 20 °C. This indicated that viscosity was independent of the applied shear rate and there was almost no particle-particle interaction in the dispersion resulting in a low viscosity.

### Example 5

### Electrical Properties of Silver Nanoparticles

The electrical properties of four samples of silver nanoparticle dispersions prepared according to the method disclosed in Example 2 were tested after sintering. Samples 1 and 2 were thermally sintered and samples 3 and 4 were photosintered. The samples were spin coated on glass substrates using a commercially available spin coater (Laurell Technologies Corp.). Coating was performed by dropping about 100 µL of ink via syringe in the middle of the substrate and spinning at 3000 rpm for 30 seconds. The films were dried in ambient conditions overnight before sintering.

Sample 1 was placed in a conventional convection oven and heated at 350 °C for 15 minutes and sample 2 was heated in the same oven at the same temperature for 1 minute. Samples 3 and 4 were exposed to a high intensity xenon lamp capable of emitting light over a broad spectrum from UV to short IR radiation. This photosintering was done at 2.8 kV for 2000 msec. After sintering, the thickness of the sintered deposit was measured. The film along with the substrate was fractured and observed side-wise by SEM. The thickness of the deposited film as recorded in several SEM pictures taken at appropriate magnification was measured at regular intervals across the length of cross section and averaged. The thickness of each deposit is recorded in Table 1 below.

Sheet resistance was measured by employing a 280I series four-point probe instrument from Four Dimensions, Inc. equipped with tungsten carbide type M four-point probe. Sheet resistance and film thickness values were used to calculate film resistivity.

**Table 1**

| **Sample** | **Sheet resistance (Ω/square)** | **Film Thickness (µm)** | **Film Resistivity (Ωm)** | **Nanoparticle Film/silver Resistivity** |
|---|---|---|---|---|
| 1 | 4.64 x 10⁻³ | 0.73 | 8.13 x 10⁻⁸ | 2.14 |
| 2 | 2.79 x 10⁻² | 0.88 | 2.45 x 10⁻⁸ | 1.54 |
| 3 | 1.72 x 10⁻¹ | 0.68 | 1.18 x 10⁻⁷ | 7.44 |
| 4 | 1.08 x 10⁻¹ | 1.10 | 1.19 x 10⁻⁷ | 7.47 |

The resistivity values tabulated in the table above indicated that the silver nanoparticles had sufficiently low resistance values to be highly suitable as conductive material in the manufacture of electronic components, such as in the formation of conductive tracks on semiconductor devices and in applications of EMI or RFI shielding and TCM. The nanoparticle film/silver resistivity is the ratio of the resistivity of the sample compared to bulk silver. If the ratio is 1, the sample has the same resistivity as bulk silver. If the ratio is greater than 1 the resistivity of the sample is greater than bulk silver.

### Example 6 (Comparative)

### Excluded Volume Effect

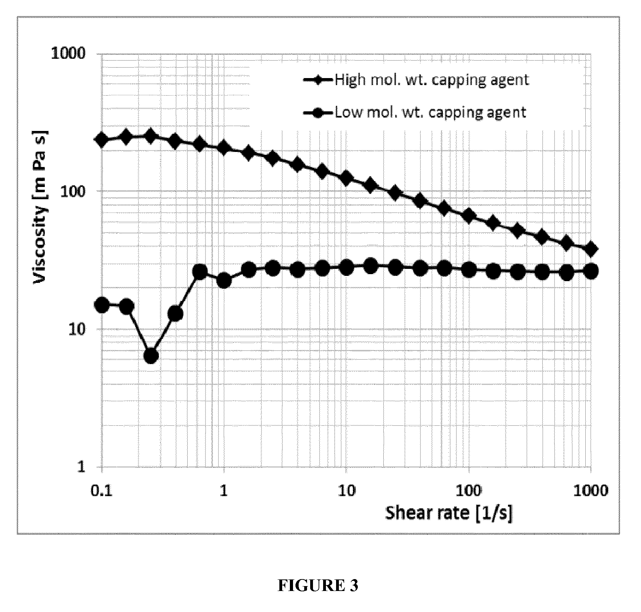

Two batches of silver nanoparticles and nanoparticle dispersions were prepared as described in Examples 1 and 2 above except one of the two batches was prepared with methacrylic acid/n-butylmethacrylate random copolymers having a high weight average molecular weight of 20,000 g/mole. The other batch was capped with methacrylic acid/n-butylmethacrylate random copolymers having a high weight average molecular weight of 4,000 g/mole. The average silver nanoparticle diameters of both samples were 56 nm and had approximately the same particle size distribution. The rheology properties of each type of silver nanoparticle were determined according to the method described in Example 4. The viscosity values of the two samples over a shear rate of 0.1 to 1000 are shown in Figure 3. The difference in the viscosities of the two samples was only due to the difference in molecular weight of the capping agent which is believed to have resulted in different capping agent thicknesses and different excluded volumes. The dip on the curve for the low molecular weight sample was due to instrument error caused by the low viscosity of the low molecular weight capping agent. The capping layer from the large molecular weight capping agent provided a higher excluded volume effect whereby effective volume fraction of particles was increased resulting in higher particle-particle interaction and thus higher viscosity. The lower molecular weight capping agent enabled keeping the excluded volume effect small such that the viscosity remained low and substantially unchanged at a shear rate of 0.5 to 1000.

### Example 7 (Comparative)

### Nanoparticles with Different Size Distributions

Three samples of silver nanoparticles and nanoparticle dispersions were tested for their viscosity based on the differences of nanoparticle size distribution in each sample (sample ES-84, ES-59 and ES-57). Each sample was prepared with nanoparticles capped with methacrylic acid/n-butylmethacrylate random copolymers having a weight average molecular weight of 20,000 g/mole. Sample ES-84 was prepared following the procedure described in Example 1 except that synthesis mixture contained 35 wt% of iso-propanol instead of mono-propylene glycol. The average particle size was 44 nm having a narrower distribution with size range of approximately 15-80 nm. Sample ES-59 was prepared by mixing nanoparticles from sample ES-84 and sample ES-57 in a weight ratio of 0.85/0.15. The average particle size for sample ES-59 was 55 nm and had a broader distribution with positive skewness compared to sample ES-84 with a size range of approximately 15 nm to 150 nm. Sample ES-57 was prepared by following the procedure described in Example 1 except that synthesis mixture contained 50 wt% of iso-propanol instead of mono-propylene glycol. The average particle size for sample ES-57 was 84 nm and a particle distribution size range of approximately 30-180 nm. Silver nanoparticle loading in these samples was 66wt% or 69 wt%. All three samples were dispersed in water/1-propoxy-2-propanol/tert-butanol 35/15/50 by weight mixture.

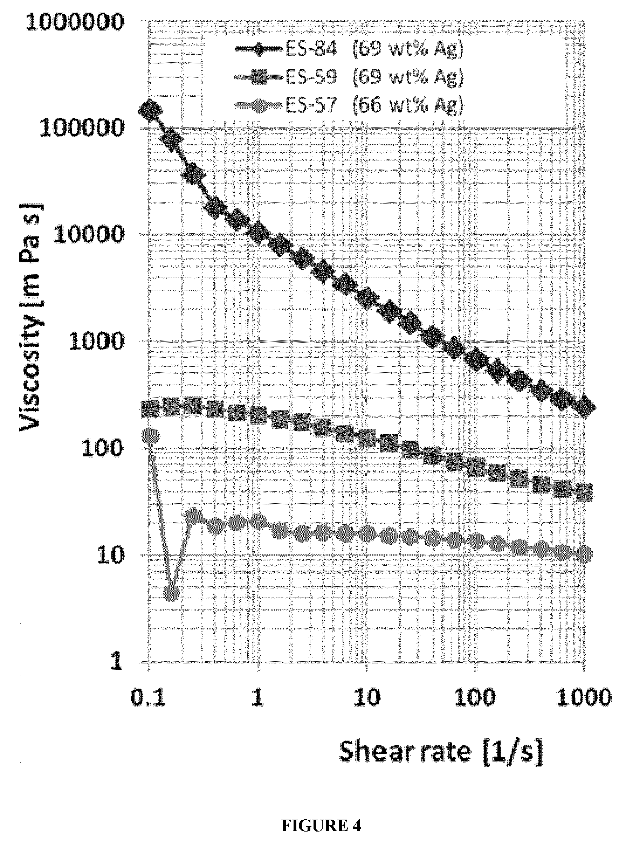

The rheological properties of the three samples were analyzed as in Example 6. The viscosities of these three samples were compared as shown in Figure 4. The graph illustrates that having larger particle size and broad distribution lower the viscosity of nanoparticle dispersion at the same weight loading. The silver nanoparticle dispersion sample ES-57 had the largest average particle size and broad particle size distribution and had the lowest viscosity with lowest shear thinning over a shear rate of 0.1 to 1000. The silver nanoparticle dispersions ES-84 and ES-59 had similar average particle sizes but sample ES-59 had broad distribution and provided lower viscosity compared to sample ES-84 with narrower particle size distribution.

### Example 8 (Comparative)

### Film Resistivity of Photosintered Silver Nanoparticles

Table 2 provides the film resistivity data for films of nanoparticles capped with different molecular weight capping agents after photo-sintering. The capping agents were random copolymers of methacrylic acid with n-butylmethacrylate (35/65 wt/wt). The weight average molecular weight of the capping agents was 4000 g/mole or 20,000 g/mole as shown in the table below. The particles capped with the high molecular weight copolymer gave high resistivity films. Here the difference in resistivity was mainly influenced by the capping agent molecular weight, not the particle size. No correlation was found between the particle size and resistivity for particles measured over a range of average particles sizes of 30-75 nm capped with the same capping agent. The samples were spin coated on glass slides. Photosintering was done with a high intensity xenon lamp capable of emitting light over a broad spectrum from UV to short IR radiation at 2.8 kV pulse for 2000 msec. Film/Silver Resistivity was determined by the same method as in Example 5 above.

**Table 2**

| **Sample** | **Molecular Weight (g/mole)** | **Average Particle Size (nm)** | **Organic Content (wt%)** | **Organic Content (Vol%)** | **Film/Silver Resistivity** |
|---|---|---|---|---|---|
| Sample 5 | 4000 | 32 | 4.88 | 35 | 9.8 |
| Sample 6 | 4000 | 52 | 2.93 | 24 | 6 |
| Sample 7 | 20,000 | 75 | 1.68 | 15 | 224 |

Organic vol. % of particles was calculated based on polymer wt% determined by TGA (assuming polymer density = 1 g/cm³ and silver density = 10.5 g/cm³). While organic content in wt% is more commonly used, organic content in vol% more closely reflects reality with respect to effect of the organic content on resistivity.

The result showed that the silver nanoparticles with the lower molecular weight random copolymer had significantly lower resistivity. Sample 7 with a capping agent having a molecular weight of 20,000 g/mole had a film resistivity of 224 x the resistivity of silver. The nanoparticles having molecular weights of 4000 g/mole were more suitable for applications in the manufacture of electronic devices than the high molecular weight sample.

### Example 9

### Silver Precursor Concentrations

Four different samples of silver nanoparticles prior to reduction to silver metal were prepared substantially according to the method described in Example 1 except the amount of silver ions in the reaction mixture varied from 8.5 wt% to 18.5 wt%. Sample 8 included silver ion concentration of 8.5 wt%; sample 9 included silver ion concentration of 10.5 wt%; sample 9 included silver ions in amounts of 15.5 wt%; and sample 10 included silver ion concentrations in amounts of 18.5 wt%. All resulted in nanoparticle formation. The synthesis of good nanoparticles at these high concentrations of the silver precursor ions demonstrated that the capping agent composed of methacrylic acid/n-butylmethacrylate random copolymer with hydrophilic and hydrophobic segments with 35wt% moieties from methacrylic acid and 65 wt% moieties from n-butylmethacrylate allowed synthesis of nanoparticles at far higher concentrations than conventional capping agents such as polyvinylpyrrolidone where nanoparticles are often prepared by polyol reduction method. Typical concentrations of silver in such conventional synthesis are typically only 2 wt% making them unsuitable for scaled up preparation of nanoparticles. Silver nanoparticles prepared with the random copolymers of methacrylic acid/n-butylmethacrylate allowed synthesis of nanoparticles at concentrations of silver > 9x that of conventional polyvinylpyrrolidone capping agents, thus providing an improved nanoparticle synthesis method.

### Example 10 (Comparative)

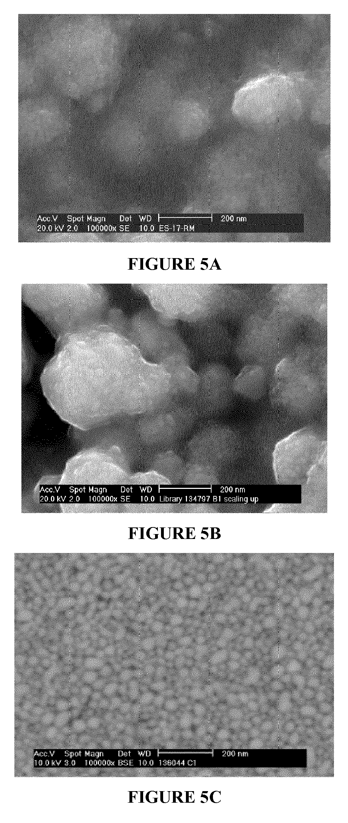

Aggregation of Silver Nanoparticles Capped with Hydrophilic Capping Agents Silver nanoparticles with three different capping agents were prepared substantially as described in Examples 1 and 2 above. In one synthesis the capping agent was acrylic acid homopolymer (Mw = 5000 g/mole) containing only hydrophilic moieties. The SEM micrograph of the resulting product is shown in Figure 5A. The second synthesis of nanoparticles was carried out using random acrylic acid/maleic acid copolymer (Mw = 3000 g/mole) having only hydrophilic moieties. The SEM micrograph of the resulting product is shown in Figure 5B. In the third synthesis the capping agent was composed of random methacrylic acid/n-butylmethacrylate copolymer (Mw = 4000 g/mole) having both hydrophilic and hydrophobic segments. The SEM micrograph of the resulting product is shown in Figure 5C. As can be seen in Figures 5A and 5B the hydrophilic acrylic acid homopolymer and hydrophilic random acrylic acid/maleic acid copolymer resulted in nanoparticles with extensive agglomeration, thus being unstable in dispersion media. In contrast, the silver nanoparticles capped with methacrylic acid/n-butylmethacrylate random copolymers with hydrophobic and hydrophilic segments, as shown in Figure 5C, had uniformly dispersed nanoparticles with negligible agglomeration. The dispersion from these nanoparticles was expected to be stable for several months. The presence of hydrophilic and hydrophobic segments ensured good adsorption of capping agent to the silver nanoparticles thereby providing greater nanoparticle stability compared to the pure hydrophilic polymers. In addition, the random distribution of these segments allowed efficient dispersion of particles in the mixed solvents of water and propylene glycol (10:90 wt/wt) resulting in stable dispersions.

## Claims

1. A composition comprising nanoparticles comprising metal and one or more capping agents composed of random copolymers of methacrylic acid and n-butylmethacrylate having hydrophobic and hydrophilic segments.

2. The composition of claim 1, wherein a methacrylic acid moiety is from 47 mole% to 83 mole% and an n-butylmethacrylate moiety is from 17 mole% to 53 mole%.

3. The composition of claim 2, wherein the methacrylic acid moiety is from 47 mole% to 62 mole% and the n-butylmethacrylate moiety is from 38 mole% to 53 mole%.

4. The composition of claim 1, wherein the one or more capping agents have weight average molecular weights of 3000 g/mole to less than 20,000 g/mole.

5. The composition of claim 4, wherein the one or more capping agents have weight average molecular weights of 3500 g/mole to 10,000 g/mole.

6. The composition of claim 5, wherein the one or more capping agents have weight average molecular weights of 3500 g/mole to 5500 g/mole.

7. The composition of claim 1, wherein the composition further comprises water and one or more organic solvents.

8. The composition of claim 1, wherein a loading of the nanoparticles are 50wt% or greater.

9. The composition of claim 1, wherein the metal of the nanoparticles is chosen from aluminum, silver, gold, platinum, palladium, indium, rubidium, ruthenium, rhodium, osmium, iridium, copper, cobalt, nickel, iron and tin.

10. The composition of claim 1, wherein nanoparticle size distribution is from 20 nm to 150 nm.

11. The composition of claim 1, wherein average nanoparticle size is from 20 nm to 100 nm.

12. A method comprising:
a) providing a substrate;
b) providing a composition comprising nanoparticles and one or more capping agents composed of random copolymers of methacrylic acid and n-butylmethacrylate having hydrophobic and hydrophilic segments; and
c) depositing the composition on the substrate to coat the substrate.

13. The method of claim 12, wherein the composition is deposited on the substrate by inkjet or electrospinning.

14. The method of claim 12, further comprising a step of sintering the composition on the substrate.

15. The method of claim 14, wherein the sintering is done by thermal sintering, photosintering or chemical sintering.

16. The method of claim 12, wherein the substrate is glass, oxide, silicon, metal, paper or polymer material.
